(19) **Europäisches Patentamt / European Patent Office / Office européen des brevets**

(11) **EP 2 227 525 B1**

(12) **EUROPEAN PATENT SPECIFICATION**

(45) Date of publication and mention of the grant of the patent:
**27.06.2018 Bulletin 2018/26**

(21) Application number: **08867397.5**

(22) Date of filing: **19.12.2008**

(51) Int Cl.:
*C10L 10/00* (2006.01)   *C10L 1/02* (2006.01)
*C10L 1/10* (2006.01)   *C10L 1/14* (2006.01)
*C10L 1/16* (2006.01)   *F02B 1/14* (2006.01)
*C10L 1/08* (2006.01)   *C10L 1/18* (2006.01)
*C10L 1/19* (2006.01)   *C10L 1/195* (2006.01)
*C10L 1/198* (2006.01)   *C10L 1/20* (2006.01)
*C10L 1/28* (2006.01)   *F02B 37/00* (2006.01)
*F02M 25/14* (2006.01)   *F02D 19/12* (2006.01)
*C10L 10/08* (2006.01)

(86) International application number:
**PCT/EP2008/067987**

(87) International publication number:
**WO 2009/083490 (09.07.2009 Gazette 2009/28)**

(54) **USE OF A VISCOSITY INCREASING COMPONENT IN A DIESEL FUEL**

VERWENDUNG EINER VISKOSITÄTSERHÖHENDEN KOMPONENTE IN EINEM DIESELKRAFTSTOFF

UTILISATION D'UN COMPOSANT AUGMENTANT LA VISCOSITÉ DANS UN CARBURANT DIESEL

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **28.12.2007 EP 07124137**

(43) Date of publication of application:
**15.09.2010 Bulletin 2010/37**

(73) Proprietor: **Shell Internationale Research Maatschappij B.V.**
**2596 HR The Hague (NL)**

(72) Inventors:
• **BUTTERY, Ian Richard**
**Chester,**
**Cheshire CH2 4NU (GB)**
• **LOUIS, Jurgen Johannes Jacobus**
**21107 Hamburg (DE)**
• **WILLIAMS, Rodney Glyn**
**Chester,**
**Cheshire CH2 4NU (GB)**

(74) Representative: **Shell Legal Services IP**
**p/a Carel van Bylandtlaan 16**
**2596 HR Den Haag (NL)**

(56) References cited:
EP-A- 1 132 454    WO-A-01/48120
WO-A-97/12014    WO-A-2005/054411
US-A1- 2006 254 131

## Description

The present invention relates to new uses for certain types of diesel fuel component, and to methods for improving the performance of turbo charged diesel engines.

Many diesel powered vehicle engines are equipped with turbo chargers, which improve their power output by increasing the amount of air entering the combustion cylinders. Operation of the turbo charger is typically regulated by the vehicle's engine management system.

Whilst with less sophisticated diesel engines it was often possible to improve performance by optimising the content and/or properties of the diesel fuels introduced into them, the options for improving performance through fuel formulation tend to be more limited for modern turbo charged engines, since engine management systems are often programmed to compensate for changes in fuel intake.

WO-A-2005/054411 describes the use of a viscosity increasing component in a diesel fuel composition, for the purpose of improving the vehicle tractive effort (VTE) and/or acceleration performance of a diesel engine into which the composition is introduced. The document exemplifies improvements in average wide open throttle (WOT) acceleration times, over engine speed ranges from around 1300 rpm upwards, and in steady state vehicle tractive effort (VTE) tests at constant engine speeds of 2000 rpm and above, for both turbo charged and non-turbo charged engines. It makes no specific mention, however, of improving acceleration performance at lower engine speeds. Yet it is at the lower speeds where a driver might be more likely to notice improvements in acceleration response.

It would be desirable to be able to further improve the performance of a turbo charged diesel engine by altering the composition and/or properties of the fuel introduced into it, as this can be expected to provide a more simple, flexible and cost effective route to performance optimisation than by making structural or operational changes to the engine itself.

According to the present invention there is provided the use of a viscosity increasing component in a diesel fuel composition, for the purpose of reducing the engine speed of a turbo charged diesel engine into which the fuel composition is, or is to be, introduced, or of a vehicle powered by such an engine, at which the turbo charger reaches its maximum speed when accelerating at an engine speed from 1200 to 2200 rpm, wherein the viscosity increasing component is selected from a Fischer-Tropsch derived fuel component, an oil, a fatty acid alkyl ester and combinations thereof.

By "diesel engine" is meant a compression ignition internal combustion engine, which is adapted to run on a diesel fuel.

By "turbo charged diesel engine" is meant a diesel engine which is powered via a turbo charger, typically under the control of an electronic engine management system.

"Acceleration performance" includes generally the responsiveness of the engine to increased throttle, for example the rate at which it accelerates from any given engine speed. "Low engine speeds" means speeds generally up to 2200 rpm, in particular up to 2000 rpm, for example from 500 to 2200 rpm or from 1200 to 2000 rpm. A "low engine speed" may be an engine speed below the level at which the engine management system which controls operation of the turbo charger begins to restrict the boost provided by the turbo charger and/or to regulate the engine charge air pressure.

It has surprisingly been found that even under the control of the engine management system, higher viscosity fuels can give performance benefits in turbo charged diesel engines, and that these benefits are significantly greater at low engine speeds (for example in the ranges referred to above) than at higher speeds. This is by no means predictable from the generally higher speed data in WO-A-2005/054411, which in the case of the VTE figures were obtained at fixed speeds and in the case of the WOT acceleration times were averaged over an engine speed up to 3500 rpm or higher. The performance advantages provided by the present invention can affect the ramp-up of the turbo charger, a transient effect observed when accelerating through the lower speed ranges, whereas the investigations described in WO-A-2005/054411 were directed more towards steady state engine conditions.

It might also have been expected that higher viscosity fuels could impair diesel engine performance, for instance by detrimentally impacting upon the injected fuel spray, thus reducing the rate of fuel evaporation and in turn causing power loss, and/or by increasing pumping losses in the fuel injection equipment. It has instead been found that the benefits of increasing the viscosity of a diesel fuel can override any such potentially detrimental effects.

Subsequent investigations have led to the hypothesis that a higher viscosity fuel causes faster revving up of the turbo charger, which thus reaches its maximum speed at a lower engine speed. In modern turbo charged diesel engines, the turbo charger speed accelerates as load and engine speed increase, until a predetermined maximum turbo charger speed is attained. An "early" boost to the engine, with the turbo charger speed increasing more rapidly at lower engine speeds, may in turn cause a discernable improvement in acceleration performance at lower engine speeds, which the driver will experience as a faster "pick-up" or acceleration response.

It has also now been found that the engine management system (EMS) may in some cases reinforce this effect. Under full load acceleration, the use of a higher viscosity fuel leads to an increase in the quantity of fuel injected, with more energy therefore being retained in the exhaust gases that drive the turbo charger. This in turn results in higher pressure air entering the engine and therefore an increased air intake charge. The engine management system is likely to react to this by injecting more fuel, thus driving the turbo charger even faster. This positive feedback loop is halted when the turbo charger reaches its maximum speed and the engine management system then applies controls to limit boost and regulate the charge air pressure. These effects are now believed to explain why the performance benefits observed using higher viscosity fuels can be amplified at lower engine speeds. In contrast, at higher engine speeds, charge air pressure is more closely controlled by the EMS and the performance benefits of a higher viscosity fuel may then be reduced and/or less readily detectable.

Thus, the present invention may be used to boost the performance of a turbo charger at low engine speeds, typically to an extent greater than that which might have been expected based solely on the properties of a fuel composition containing a viscosity increasing component.

The present invention suitably involves use of the viscosity increasing component for the purpose of reducing the engine speed at which the turbo charger reaches its maximum speed when accelerating.

Engine speeds can conveniently be measured by interrogation of the engine management system during controlled acceleration tests. They may alternatively be measured using a dynamometer. Such tests are typically conducted at wide open throttle. They may involve accelerating the engine at a fixed rate from a low to a high engine speed, for instance as described in the examples below.

Turbo charger speed is related to the engine air intake pressure (i.e. the boost pressure from the turbo charger), which can either be measured using conventional pressure sensors or in some cases by interrogation of the engine management system, typically using tests as described above. This in turn can allow determination of the point when the turbo charger reaches its maximum speed, or of the rate of increase in turbo charger speed.

Acceleration performance may also be assessed by a suitably experienced driver accelerating a vehicle which is powered by the engine under test, for instance from 0 to 100 km/hour, on a road. The vehicle should be equipped with appropriate instrumentation such as an engine speedometer, to enable changes in acceleration performance to be related to engine speed.

Another consequence of this increase in turbo charger acceleration rate is that the engine will reach its maximum torque more quickly. Thus, the viscosity increasing component may be used for the purpose of reducing the time taken for the engine to reach its maximum torque when accelerating, or of increasing the rate at which the engine reaches its maximum torque, or of reducing the engine speed at which the engine reaches its maximum torque.

More generally, the viscosity increasing component may be used to increase the engine torque at any given speed, in the low engine speed range.

Engine torque may be derived from the force exerted on a dynamometer by the wheel(s) of a vehicle which is powered by the engine under test. It may, using suitably specialised equipment (for example the Kistler™ RoaDyn™), be measured directly from the wheels of such a vehicle.

A yet further consequence of using a viscosity increasing component according to the present invention is that the engine charge air pressure will reach its maximum level (before the EMS intervenes to regulate the charge pressure) more quickly. Thus, the viscosity increasing component may be used for the purpose of reducing the time taken for the charge air pressure to reach its maximum value when accelerating, or of reducing the engine speed at which the charge air pressure reaches its maximum value. It may be used for the purpose of reducing the engine speed at which the engine management system starts to regulate the charge air pressure, or the time taken for such regulation to begin.

Charge air pressures may be measured using a commercially available pressure sensor, for instance positioned in the intake track of a vehicle powered by the engine under test, immediately downstream of the turbo charger.

The present invention is of use in improving the low speed acceleration performance of a turbo charged diesel engine or of a vehicle powered by such an engine. Low speed acceleration performance may be assessed by accelerating the engine and monitoring changes in engine speed, engine torque, air charge pressure and/or turbo charger speed with time. This assessment may suitably be carried out over a range of engine speeds for instance from 1200 to 2000 rpm or from 1400 to 1900 rpm.

In general, an improvement in low speed acceleration performance may be manifested by reduced acceleration times, and/or by any one or more of the effects described above, for example a faster increase in engine torque or turbo charger speed, or an increase in engine torque at any given speed.

In the context of the present invention, an "improvement" in low speed acceleration performance embraces any degree of improvement. Similarly a reduction or increase in a measured parameter - for example the time taken for the turbo charger to reach its maximum speed - embraces any degree of reduction or increase, as the case may be. The improvement, reduction or increase - as the case may be - may be as compared to the relevant parameter when using the fuel composition prior to incorporation of the viscosity increasing component, or when using an otherwise analogous fuel composition of lower viscosity. It may be as compared to the relevant parameter measured when the same engine is run on an otherwise analogous fuel composition which is intended (e.g. marketed) for use in a turbo charged diesel engine, prior to adding a viscosity increasing component to it.

The present invention may, for example, involve adjusting the properties and/or performance and/or effects of the diesel fuel composition, in particular its effect on the low speed acceleration performance of a turbo charged diesel engine, by means of the viscosity increasing component, in order to meet a desired target.

As described in WO-A-2005/054411 (see in particular page 3, line 22 to page 4, line 17), an improvement in low speed acceleration performance may also embrace mitigation, to at least a degree, of a decrease, i.e. deterioration, in acceleration performance due to another cause, in particular due to another fuel component or additive included in the diesel fuel composition. By way of example, a fuel composition may contain one or more components intended to reduce its overall density so as to reduce the level of emissions which it generates on combustion; a reduction in density can result in loss of engine power, but this effect may be overcome or at least mitigated by the use of a viscosity increasing component described herein.

An improvement in low speed acceleration performance may also embrace restoration, at least partially, of acceleration performance which has been reduced for another reason such as the use of a fuel containing oxygenated components (e.g. so-called "biofuels"), or the build-up of combustion related deposits in the engine (typically in the fuel injectors).

Where the viscosity increasing component described herein is used to reduce the engine speed at which the engine management system begins to regulate the charge air pressure (which may also be the engine speed at which the turbo charger reaches its maximum speed, and at which the charge air pressure reaches its maximum value), the reduction may for instance be of 5 rpm or greater, preferably of 10 rpm or greater, or of 15 or 20 or 25 or 50 or 75 or 80 rpm or greater, in cases up to about 100 rpm. Due to the positive feedback loop discussed above, relatively small reductions in these engine speeds can lead to relatively large differences in engine power, torque and general acceleration performance. The relevant engine speed may be reduced by at least 0.25%, preferably by at least 0.50%, or by at least 0.75 or 1 or 1.25 or 1.5 or 2 or 3 or 4%, in cases up to about 5%.

Where the viscosity increasing component described herein is used to increase the engine torque, during a period of acceleration, at a given engine speed, the increase may be of at least 0.5%, preferably of at least 1 or 2 or 3%, compared to that obtained when running the engine on the fuel composition prior to incorporation of the viscosity increasing component, and/or when running the engine on an otherwise analogous diesel fuel composition of lower viscosity. The increase may be as compared to the engine torque at the relevant speed when the same engine is run on an otherwise analogous fuel composition which is intended (e.g. marketed) for use in a turbo charged diesel engine, prior to adding a viscosity increasing component to it.

Where the viscosity increasing component described herein is used to increase the turbo charger boost pressure, during a period of acceleration (i.e. during turbo charger ramp-up), at a given engine speed, the increase may be of at least 0.5%, preferably of at least 1 or 1.5 or 2%, compared to that obtained when running the engine on the fuel composition prior to incorporation of the viscosity increasing component, and/or when running the engine on an otherwise analogous diesel fuel composition of lower viscosity. The increase may be as compared to the turbo charger boost pressure at the relevant speed when the same engine is run on an otherwise analogous fuel composition which is intended (e.g. marketed) for use in a turbo charged diesel engine, prior to adding a viscosity increasing component to it.

The viscosity increasing component may also be used to improve power development in the engine at low engine speeds. In other words, it may be used to increase the average engine power as the engine accelerates through a particular low speed range, for example from 1200 to 1900 rpm (or for example from 40 to 60 km/hour in 4th gear). The use of a viscosity increasing component has been found to lead to significantly higher power benefits at low engine speeds than would have been expected merely from the associated change in fuel properties.

Engine power may suitably be derived from measured engine torque and engine speed values, as is known in the art.

The viscosity increasing component may also be used for the purpose of increasing the engine power or torque, the charge air pressure and/or the injected fuel volume, at any given engine speed, for a turbo charged diesel engine, in particular at low engine speeds.

The use of a higher density fuel may also improve acceleration performance at low engine speeds, in a similar manner to that described above. In particular the use of a higher viscosity together with a higher density can improve engine performance in this way, as described in more detail below.

The diesel fuel composition in which the viscosity increasing component is used, in accordance with the present invention, may be any type of diesel fuel composition suitable for use in a diesel engine.

The composition may be used in, and/or may be suitable and/or adapted and/or intended for use in, any type of compression ignition engine which is equipped with a turbo charger, whether a direct injection (DI) diesel engine, for example of the rotary pump, in-line pump, unit pump, electronic unit injector or common rail type, or an indirect injection (IDI) diesel engine. The composition may be suitable and/or adapted and/or intended for use in a heavy- and/or a light-duty diesel engine.

The present invention may in particular be applicable to an IDI engine, and/or to a high speed (HSDI), a high pressure-high speed (HP-HSDI), a common rail (CRDI) or an electronic unit (EUDI) direct injection engine, operating for example at a pressure in the range 15 to 250 MPa. In an embodiment, the present invention is applicable to an IDI or EUDI engine.

In addition to the viscosity increasing component, a diesel fuel composition prepared herein may comprise one or more diesel fuel components of conventional type. Such components will typically comprise liquid hydrocarbon middle distillate fuel oil(s), for instance petroleum derived gas oils. In general such fuel components may be organically or synthetically derived, and are suitably obtained by distillation of a desired range of fractions from a crude oil. They will typically have boiling points within the usual diesel range of 150 to 410°C or 170 to 370°C, depending on grade and use. Typically the fuel composition will include one or more cracked products, obtained by splitting heavy hydrocarbons.

A petroleum derived gas oil may, for instance, be obtained by refining and optionally (hydro)processing a crude petroleum source. It may be a single gas oil stream obtained from such a refinery process or a blend of several gas oil fractions obtained in the refinery process via different processing routes. Examples of such gas oil fractions are straight run gas oil, vacuum gas oil, gas oil as obtained in a thermal cracking process, light and heavy cycle oils as obtained in a fluid catalytic cracking unit and gas oil as obtained from a hydrocracker unit. Optionally a petroleum derived gas oil may comprise some petroleum derived kerosene fraction.

Such gas oils may be processed in a hydrodesulphurisation (HDS) unit so as to reduce their sulphur content to a level suitable for inclusion in a diesel fuel composition.

In a fuel composition prepared herein, the base fuel may itself comprise a mixture of two or more diesel fuel components of the types described above. It may be or contain a so-called "biodiesel" fuel component such as a vegetable oil or vegetable oil derivative (e.g. a fatty acid ester, in particular a fatty acid methyl ester) or another oxygenate such as an acid, ketone or ester. Such components need not necessarily be bio-derived. It may also contain fuels derived from hydrogenated vegetable oils.

A base fuel may contain a Fischer-Tropsch derived fuel, in particular a Fischer-Tropsch derived gas oil.

Diesel fuel components contained in a composition prepared herein will typically have a density of from 0.750 to 0.900 g/cm$^3$, preferably from 0.800 to 0.860 g/cm$^3$, at 15°C (e.g. ASTM D-4502) and/or a VK 40 of from 1.5 to 6.0 mm$^2$/s (centistokes) (ASTM D-445). Density and viscosity are strongly correlated for distillate fuels, by virtue of their similar composition of aromatics and paraffin content. This means that selecting a diesel fuel component by a desired increased or decreased viscosity will tend to imply a corresponding increase or decrease in density.

An automotive diesel fuel composition which results from carrying out the present invention will suitably comply with applicable current standard specification(s) such as for example EN-590 (for Europe) or ASTM D-975 (for the USA). By way of example, the overall fuel composition may have a density from 0.82 to 0.845 g/cm$^3$ at 15°C (ASTM D-4052); a $T_{95}$ boiling point (ASTM D-86) of 360°C or less; a measured cetane number (ASTM D-613) of 51 or greater; a VK 40 (ASTM D-445) from 2 to 4.5 mm$^2$/s (centistokes); a sulphur content (ASTM D-2622) of 50 mg/kg or less; and/or a polycyclic aromatic hydrocarbons (PAH) content (IP 391(mod)) of less than 11 %m/m. Relevant specifications may, however, differ from country to country and from year to year, and may depend on the intended use of the fuel composition.

A diesel fuel composition prepared herein may contain fuel components with properties outside of these ranges, since the properties of an overall blend may differ, often significantly, from those of its individual constituents.

A diesel fuel composition prepared herein suitably contains no more than 5000 ppmw (parts per million by weight) of sulphur, typically from 2000 to 5000 ppmw, or from 1000 to 2000 ppmw, or alternatively up to 1000 ppmw. The composition may for example be a low or ultra low sulphur fuel, or a sulphur free fuel, for instance containing at most 500 ppmw, preferably no more than 350 ppmw, most preferably no more than 100 or 50 or even 10 ppmw, of sulphur.

The composition may be additivated as known in the art, for instance as described below.

Due to the presence of the viscosity increasing component, the VK 40 of a diesel fuel composition prepared herein may suitably be 2.7 or 2.8 mm$^2$/s (centistokes) or greater, preferably 2.9 or 3.0 or 3.1 or 3.2 or 3.3 or 3.4 mm$^2$/s (centistokes) or greater, in cases 3.5 or 3.6 or 3.7 or 3.8 or 3.9 or even 4 mm$^2$/s (centistokes) or greater. Its VK 40 may be up to 4.5 or 4.4 or 4.3 mm$^2$/s (centistokes). References to viscosity in this specification are intended, unless stated otherwise, to mean kinematic viscosity.

The maximum viscosity of a diesel fuel composition may often be limited by relevant legal and/or commercial specifications - the European diesel fuel specification EN-590, for example, stipulates a maximum kinematic viscosity at 40°C (VK 40) of 4.5 mm$^2$/s (centistokes), whilst a Swedish Class 1 diesel fuel must have a VK 40 of no greater than 4.0 mm$^2$/s (centistokes). Typical commercial automotive diesel fuels are currently manufactured to far lower viscosities than these, however, such as around 2 to 3 mm$^2$/s (centistokes). Thus, the present invention may involve manipulation of an otherwise standard specification diesel fuel composition, to increase its viscosity so as to improve the low speed acceleration performance of a turbo charged engine into which it is introduced.

A diesel fuel composition prepared herein may for instance be a composition such as is described in WO-A-2005/054411, the entire contents of which are herein incorporated by reference.

The viscosity increasing component used in the present invention may be any component capable of increasing the kinematic viscosity of a diesel fuel composition in which it is included. It should therefore have a kinematic viscosity which is greater than that of the fuel composition prior to its incorporation therein. It may itself be a fuel component which has been formulated to have a high viscosity, for example within the ranges described below.

The viscosity increasing component, on incorporation into the diesel fuel composition, suitably increases the VK 40 of the composition by at least 0.1 mm$^2$/s (centistokes), preferably by at least 0.2 or 0.25 or 0.3 or 0.4 or 0.5 mm$^2$/s (centistokes), more preferably by at least 0.6 or 0.7 or 0.8 or 0.9 or 1 mm$^2$/s (centistokes), in cases by at least 1.2 or 1.5 or 1.8 or 2 mm$^2$/s (centistokes).

In the context of the present invention, "use" of a viscosity increasing component in a diesel fuel composition means incorporating the viscosity increasing component into the composition, typically as a blend (i.e. a physical mixture) with one or more other diesel fuel components and optionally with one or more fuel additives. The viscosity increasing component is conveniently incorporated before the composition is introduced into an internal combustion engine or other system which is to be run on the composition. Instead or in addition the use may involve running a fuel consuming system, such as an engine, on the fuel composition containing the viscosity increasing component, typically by introducing the composition into a combustion chamber of the system.

"Use" of a viscosity increasing component, in accordance with the present invention, may also embrace supplying such a component together with instructions for its use in a diesel fuel composition to achieve one or more of the purpose(s) described above, in particular to improve the low speed acceleration performance of a turbo charged diesel engine into which the composition is introduced.

The viscosity increasing component is suitably compatible with relevant diesel fuel specifications, in order that it can blend effectively and perform effectively as part of a diesel fuel composition. Accordingly, it is not necessary that the component itself be suitable for use as a diesel fuel, only that the overall fuel composition containing the component be suitable for use in that way. Suitably, however, the viscosity increasing component will have a boiling range meeting that of a diesel fuel specification, for example EN-590. Some high viscosity oils which might serve to increase viscosity have a boiling range in excess of the usual diesel fuel specification and may, therefore, be less suitable for use in the present invention.

Constituents of the viscosity increasing component (or the majority thereof, for instance 95 %w/w or greater) preferably therefore have boiling points within the typical diesel fuel ("gas oil") range, i.e. from about 150 to 490°C for a higher boiling range oil or from 170 to 415°C for a lower boiling range oil. They will suitably have a 90 %w/w distillation temperature of from 300 to 470°C or from 300 to 400°C. Boiling ranges may be determined for example using the standard test method ASTM D-86 or EN ISO 3405.

Suitably, the viscosity increasing component comprises, or more preferably consists essentially of, compounds which contain only carbon and hydrogen. A limited amount of contaminants such as sulphur-containing compounds may also be present. Preferably, 80 %w/w or more of its constituents are compounds consisting of carbon and hydrogen only, more preferably 90 %w/w or more.

The viscosity increasing component may in particular be selected from a Fischer-Tropsch derived fuel component, an oil, and combinations thereof.

In the context of the present invention, the term "Fischer-Tropsch derived" means that a material is, or derives from, a synthesis product of a Fischer-Tropsch condensation process. The term "non-Fischer-Tropsch derived" may be interpreted accordingly. A Fischer-Tropsch derived fuel or fuel component will, therefore, be a hydrocarbon stream in which a substantial portion, except for added hydrogen, is derived directly or indirectly from a Fischer-Tropsch condensation process.

The Fischer-Tropsch reaction converts carbon monoxide and hydrogen into longer chain, usually paraffinic, hydrocarbons:

$$n(CO + 2H_2) = (-CH_2 -)_n + nH_2O + heat,$$

in the presence of an appropriate catalyst and typically at elevated temperatures (e.g. 125 to 300°C, preferably 175 to 250°C) and/or pressures (e.g. 0.5 to 10 MPa, preferably 1.2 to 5 MPa). Hydrogen:carbon monoxide ratios other than 2:1 may be employed if desired.

The carbon monoxide and hydrogen may themselves be derived from organic, inorganic, natural or synthetic sources, typically either from natural gas or from organically derived methane.

A viscosity increasing component of use in the present invention may be obtained directly from the refining or the Fischer-Tropsch reaction, or indirectly for instance by fractionation or hydrotreating of the refining or synthesis product to give a fractionated or hydrotreated product. Hydrotreatment can involve hydrocracking to adjust the boiling range (see e.g. GB-B-2077289 and EP-A-0147873) and/or hydroisomerisation which can improve cold flow properties by increasing the proportion of branched paraffins. EP-A-0583836 describes a two-step hydrotreatment process in which a Fischer-Tropsch synthesis product is firstly subjected to hydroconversion under conditions such that it undergoes substantially no isomerisation or hydrocracking (this hydrogenates the olefinic and oxygen-containing components), and then at least part of the resultant product is hydroconverted under conditions such that hydrocracking and isomerisation occur to yield a substantially paraffinic hydrocarbon fuel. The desired fraction(s), typically gas oil fraction(s), may subsequently be isolated for instance by distillation.

Other post-synthesis treatments, such as polymerisation, alkylation, distillation, cracking-decarboxylation, isomerisation and hydroreforming, may be employed to modify the properties of Fischer-Tropsch condensation products, as described for instance in US-A-4125566 and US-A-4478955.

Typical catalysts for the Fischer-Tropsch synthesis of paraffinic hydrocarbons comprise, as the catalytically active component, a metal from Group VIII of the periodic table of the elements, in particular ruthenium, iron, cobalt or nickel. Suitable such catalysts are described for instance in EP-A-0583836.

An example of a Fischer-Tropsch based process is the Shell™ "Gas-to-liquids" or "GtL" technology (formerly known as the SMDS (Shell Middle Distillate Synthesis) and described in "The Shell Middle Distillate Synthesis Process", van der Burgt et al, paper delivered at the 5th Synfuels Worldwide Symposium, Washington DC, November 1985, and in the November 1989 publication of the same title from Shell International Petroleum Company Ltd, London, UK). In the latter case, preferred features of the hydroconversion process may be as disclosed therein. This process produces middle distillate range products by conversion of a natural gas into a heavy long-chain hydrocarbon (paraffin) wax which can then be hydroconverted and fractionated.

For use in the present invention, a Fischer-Tropsch derived fuel component is preferably any suitable component derived from a gas to liquid synthesis (hereinafter a GtL component), or a component derived from an analogous Fischer-Tropsch synthesis, for instance converting gas, biomass or coal to liquid (hereinafter an XtL component). A Fischer-Tropsch derived component is preferably a GtL component. In general a suitable XtL component may be a middle distillate fuel component, for instance selected from kerosene, diesel and gas oil fractions as known in the art; such components may be generically classed as synthetic process fuels or synthetic process oils. Preferably an XtL component for use as a viscosity increasing component is a gas oil.

An oil may be a mineral or a synthetic oil, i.e. of mineral or synthetic origin, or a combination thereof. It may itself be Fischer-Tropsch derived, for example a Fischer-Tropsch derived base oil.

A mineral oil is suitably selected from a mineral lubricating oil and a mineral process oil.

Mineral lubricating oils and process oils include liquid petroleum oils and/or are produced by solvent refining, acid treating or (severe) hydroprocessing (such as hydrocracking or hydrofinishing), and may be dewaxed by either a solvent or a catalytic process. Mineral lubricating oils are sold by Shell companies under the designations "HVI" or "MVIN".

A synthetic oil may be selected from any synthetic lubricating oil, i.e. a lubricating oil of synthetic origin. Synthetic lubricating oils are known or commercially available and include the type manufactured by the hydroisomerisation of wax, such as those sold by Shell companies under the designation Shell XHVI™; and mixtures of $C_{10-50}$ hydrocarbon polymers and interpolymers, for example liquid polymers and interpolymers of alpha-olefins and conventional esters, for example polyol esters. Preferably, a synthetic lubricating oil is selected from alpha-olefin oligomers, such as an octene-1/decene-1 copolymer; dicarboxylic acid esters, such as di-2-ethylhexyl sebacate; hindered ester oils, such as trimethylolpropane caprylate and pentaerythritol caproate; and other various synthetic oils, such as polyglycol oils, silicone oils, polyphenyl ether oils, halogenated hydrocarbon oils, and alkylbenzene oils.

A viscosity increasing component may be a standard diesel fuel component (whether petroleum derived or Fischer-Tropsch derived) having a higher viscosity than would otherwise have been used in a diesel fuel composition.

A viscosity increasing component may be a vegetable oil, for example tallow oil, rapeseed oil, palm oil or soybean oil.

A viscosity increasing component may be a fatty acid alkyl ester (FAAE), for example a fatty acid methyl ester (FAME). Such components are already known as renewable diesel fuels (so-called "biodiesel" fuels). They contain long chain carboxylic acid molecules (generally from 10 to 22 carbon atoms long), each having an alcohol molecule attached to one end. Organically derived oils such as vegetable oils (including recycled vegetable oils) and animal fats can be subjected to a transesterification process with an alcohol (typically a $C_1$ to $C_5$ alcohol) to form the corresponding fatty esters, typically monoalkylated. This process, which is suitably either acid- or base-catalysed such as with the base KOH, converts the triglycerides contained in the oils into fatty acid esters and free glycerol, by separating the fatty acid components of the oils from their glycerol backbone.

A FAAE may be any alkylated fatty acid or mixture of fatty acids. Its fatty acid component(s) are preferably derived from a biological source, more preferably a vegetable source. They may be saturated or unsaturated; if the latter, they may have one or more double bonds. They may be branched or un-branched. Suitably they will have from 10 to 30, more suitably from 10 to 22 or from 12 to 22, carbon atoms in addition to the acid group(s) $-CO_2H$. A FAAE will typically comprise a mixture of different fatty acid esters of different chain lengths, depending on its source. For instance the commonly available rapeseed oil contains mixtures of palmitic acid ($C_{16}$), stearic acid ($C_{18}$), oleic, linoleic and linolenic acids ($C_{18}$, with one, two and three unsaturated carbon-carbon bonds respectively) and sometimes also erucic acid ($C_{22}$) - of these the oleic and linoleic acids form the major proportion. Soybean oil contains a mixture of palmitic, stearic, oleic, linoleic and linolenic acids. Palm oil usually contains a mixture of palmitic, stearic and linoleic acid components.

A FAAE used in the present invention is preferably derived from a natural fatty oil, for instance a vegetable oil such as rapeseed oil, soybean oil, coconut oil, sunflower oil, palm oil, peanut oil, linseed oil, camelina oil, safflower oil, babassu oil, tallow oil or rice bran oil. It may in particular be an alkyl ester (suitably the methyl ester) of rapeseed, soy, coconut or palm oil.

The FAAE is preferably a $C_1$ to $C_5$ alkyl ester, more preferably a methyl, ethyl or propyl (suitably isopropyl) ester, yet more preferably a methyl or ethyl ester and in particular a methyl ester.

It may, for example, be selected from the group consisting of rapeseed methyl ester (RME, also known as rape oil methyl ester or rape methyl ester), soy methyl ester (SME, also known as soybean methyl ester), palm oil methyl ester (POME), coconut methyl ester (CME) and the corresponding ethyl esters, as well as mixtures thereof. It may be selected from the group consisting of rapeseed methyl ester, soy methyl ester, palm oil methyl ester and the corresponding ethyl esters, as well as mixtures thereof. In general it may be either natural or synthetic, refined or unrefined ("crude"). In some cases the higher viscosity ethyl esters may be preferred.

In general, it may be preferred for the FAAE to conform to the European specification EN 14214 for fatty acid methyl esters for use as diesel fuels.

Preferably, the viscosity increasing component has a VK 40 (ASTM D-445) in the range of from 2 to 500 $mm^2/s$ (centistokes), preferably from 3.5 to 500 $mm^2/s$ (centistokes), more preferably from 10 to 200 $mm^2/s$ (centistokes), yet more preferably from 8 or 10 or 20 up to 100 $mm^2/s$ (centistokes).

A moderately high viscosity component might for instance have a VK 40 of from 3.5 to 45 $mm^2/s$ (centistokes) or from 6 to 45 $mm^2/s$ (centistokes), for example from 12 to 40 $mm^2/s$ (centistokes) or from 15 to 35 $mm^2/s$ (centistokes). A high viscosity component might have a VK 40 of from 45 to 200 $mm^2/s$ (centistokes). Other viscosity increasing components might have a VK 40 of from 3.5 to 6 $mm^2/s$ (centistokes) or from 3.5 to 5.5 $mm^2/s$ (centistokes).

A particularly suitable Fischer-Tropsch derived (XtL) viscosity increasing component, which may be a fuel or oil component as defined below, may have for example a VK 40 (ASTM D-445) of from 3 to 200 $mm^2/s$ (centistokes), and/or a density at 15°C (ASTM D-4052) of from 0.76 to 0.83 $g/cm^3$. High viscosity synthetic Fischer-Tropsch derived oils may be of particular use as viscosity increasing components.

A particularly suitable mineral process or lubricating oil for use as a viscosity increasing component is a mineral white oil, or is an oil such as HVI 55, having for example a VK 40 of from 18 to 22 $mm^2/s$ (centistokes), and/or a density at 15°C of from 0.845 to 0.855 $g/cm^3$. Alternatively the oil may be a process oil such as Gravex 925™ (ex. Shell), which may have for example a VK 40 of from 30 to 34 $mm^2/s$ (centistokes), and/or a density at 15°C of from 0.88 to 0.91 $g/cm^3$. Alternatively the oil may be a severely hydroprocessed oil such as Ondina™ (ex. Shell), boiling in the range 315 to 400°C, which may have, for example, a VK 40 of from 14 to 16 $mm^2/s$ (centistokes), and/or a density at 15°C of from 0.845 to 0.86 $g/cm^3$.

A particularly suitable synthetic lubricating oil for use as a viscosity increasing component is a hydroisomerised slack wax obtained by the hydroisomerisation of a wax, such as that sold by Shell companies under the designation Shell XHVI™.

The density of the viscosity increasing component at 15°C (ASTM D-4502) may be from 0.750 to 0.980 $g/cm^3$, such as from 0.750 to 0.850 $g/cm^3$ or from 0.770 to 0.820 $g/cm^3$. In cases it may have a density at 15°C of from 0.800 to 0.950 $g/cm^3$, more preferably from 0.820 to 0.915 $g/cm^3$.

The viscosity increasing component may have any nature of specification such as sulphur content and cetane index, depending on the concentration at which it is used in the diesel fuel composition and the properties required of the overall composition. For example, it may be that in certain cases a suitable viscosity increasing component has a high sulphur content of up to 10000 ppmw, but is used at low levels so that the increase which it causes in sulphur content still leaves the overall diesel fuel composition within a desired specification such as EN-590.

The viscosity increasing component may, therefore, contain any level of sulphur, for example up to 10000 ppmw. It may be a low or moderately high sulphur component which may be used in the fuel composition in any desired amount such as in excess of 25 %v/v, or from 30 to 70 %v/v, or it may be a high sulphur component which may be used in an amount of less than 35 %v/v, such as from 3 to 30 %v/v. It may contain from 5000 to 10000 ppmw of sulphur, or from 2000 to 5000 ppmw, or from 1000 to 2000 ppmw. It may be a low or ultra low sulphur or sulphur free component, for instance containing at most 1000 ppmw, for example at most 500 ppmw, preferably no more than 350 ppmw, most preferably no more than 100 or 50 or even 10 ppmw, of sulphur.

The viscosity increasing component may have one or more beneficial properties. It may, for example, be capable of increasing the cetane number of the diesel fuel composition, and/or improving its cold flow properties, and/or reducing the level of emissions generated on combustion of the composition. It may, for example, comprise a paraffinic oil having a cetane number higher than that of the remainder of the composition.

The viscosity increasing component may itself be additivated, as known in the art or as described below in connection with the overall fuel composition.

In a diesel fuel composition prepared herein, the viscosity increasing component is suitably used at a concentration of 2 %v/v or greater, preferably of 3 %v/v or greater, more preferably of 4 or 5 or in cases 10 or 15 or 20 or 25 or 30 %v/v or greater. It may be used at a concentration of up to 95 %v/v, preferably up to 90 or 80 %v/v, such as from 5 or 10 to 90 %v/v. These concentrations are based on the volume of the overall fuel composition. Where a combination of two or more viscosity increasing components is used in the composition, the same concentration ranges may apply to the overall combination.

The concentration of the viscosity increasing component used will depend on the desired viscosity of the overall fuel composition and the difference in viscosities between the viscosity increasing component and the remainder of the composition. For example, the viscosity increasing component may be a moderately high viscosity component which may be used in amounts of in excess of 25 %v/v, such as from 30 to 70 %v/v, or alternatively it may be a high viscosity component which may be used in amounts of less than 35 %v/v, such as from 3 to 30 %v/v.

The relative proportions of the viscosity increasing component, other diesel fuel component(s) and any other components or additives, in a diesel fuel composition prepared herein, may also depend on other desired properties such as density, emissions performance and cetane number, in particular density.

In particular, a diesel fuel composition prepared herein may contain, by volume:

a) from 90 to 95% diesel fuel and from 5 to 10% viscosity increasing component as a highly refined mineral process oil or mineral lubricating oil; or
b) from 5 to 50% diesel fuel and from 50 to 95% viscosity increasing component as an XtL component; or
c) from 2 to 50% diesel fuel and from 50 to 98% of a viscosity increasing component which is a mixture of from 15 to 40% of a highly refined mineral process oil or mineral lubricating oil and from 40 to 85% of an XtL component.

In accordance with the present invention, two or more viscosity increasing components may be used in a diesel fuel composition for the purpose(s) described above.

A fuel composition prepared herein may or may not contain additives, which will typically be incorporated together with diesel fuel component(s) contained in the composition. Thus, the composition may contain a minor proportion (preferably 1 %w/w or less, more preferably 0.5 %w/w (5000 ppmw) or less and most preferably 0.2 %w/w (2000 ppmw) or less, of one or more diesel fuel additives.

Generally speaking, in the context of the present invention any fuel component or fuel composition may be additivated (additive-containing) or unadditivated (additive-free). Such additives may be added at various stages during the production of a fuel component or composition; those added to a base fuel at the refinery for example might be selected from anti-static agents, pipeline drag reducers, flow improvers (e.g. ethylene/vinyl acetate copolymers or acrylate/maleic anhydride copolymers), lubricity enhancers, antioxidants and wax anti-settling agents. Other additives may be added downstream of the refinery, as may the viscosity increasing component.

A fuel composition prepared herein may for instance include a detergent, by which is meant an agent (suitably a surfactant) which can act to remove, and/or to prevent the build up of, combustion related deposits within an engine, in particular in a fuel injection system such as in the injector nozzles. Such materials are sometimes referred to as dispersant additives.

Where the fuel composition includes a detergent, preferred concentrations lie in the range from 20 to 500 ppmw active matter detergent based on the overall fuel composition, more preferably from 40 to 500 ppmw, most preferably from 40 to 300 ppmw or from 100 to 300 ppmw or from 150 to 300 ppmw.

Examples of suitable detergent additives include polyolefin substituted succinimides or succinamides of polyamines, for instance polyisobutylene succinimides or polyisobutylene amine succinamides; aliphatic amines; Mannich bases or amines and polyolefin (e.g. polyisobutylene) maleic anhydrides. Succinimide dispersant additives are described for example in GB-A-960493, EP-A-0147240, EP-A-0482253, EP-A-0613938, EP-A-0557516 and WO-A-98/42808. Particularly preferred are polyolefin substituted succinimides.

Detergent-containing diesel fuel additives are known and commercially available.

Other components which may be incorporated in fuel additives, for instance in combination with a detergent, include lubricity enhancers, fatty acid methyl esters (FAMEs) and amide-based additives; dehazers, e.g. alkoxylated phenol formaldehyde polymers; anti-foaming agents (e.g. polyether-modified polysiloxanes); ignition improvers (cetane improvers) (e.g. 2-ethylhexyl nitrate (EHN), cyclohexyl nitrate, di-tert-butyl peroxide and those disclosed in US-A-4208190 at column 2, line 27 to column 3, line 21); anti-rust agents (e.g. a propane-1,2-diol semi-ester of tetrapropenyl succinic acid, or polyhydric alcohol esters of a succinic acid derivative, the succinic acid derivate having on at least one of its alpha-carbon atoms an unsubstituted or substituted aliphatic hydrocarbon group containing from 20 to 500 carbon atoms, e.g. the pentaerythritol diester of polyisobutylene-substituted succinic acid); corrosion inhibitors; reodorants; anti-wear additives; anti-oxidants (e.g. phenolics such as 2,6-di-tert-butylphenol, or phenylenediamines such as N,N'-di-sec-butyl-p-phenylenediamine); metal deactivators; combustion improvers; static dissipator additives; flow improvers; and wax anti-settling agents.

Unless otherwise stated, the (active matter) concentration of each such additional component in the overall fuel composition is preferably up to 1 %w/w (10000 ppmw), more preferably in the range from 0.1 or 1 or 2 or 5 ppmw to 1000 ppmw, advantageously from 75 to 300 ppmw, such as from 95 to 150 ppmw. (All additive concentrations quoted in this specification refer, unless stated otherwise, to active matter concentrations by mass.)

It is particularly preferred that a lubricity enhancer be included in the fuel composition, especially when it has a low (e.g. 500 ppmw or less) sulphur content. The lubricity enhancer is conveniently present at a concentration of up to 1000 ppmw, preferably up to 500 or 300 or 200 ppmw, based on the overall fuel composition. Suitable commercially available lubricity enhancers include ester- and acid-based additives. When present as a lubricity enhancer, a fatty acid methyl ester (FAME) may be present in the range from 0.5 to 2 %w/w.

The (active matter) concentration of any dehazer in the fuel composition will preferably be in the range from 0.1 or 1 ppmw to 20 ppmw, more preferably from 1 to 15 ppmw, still more preferably from 1 to 10 ppmw and advantageously from 1 to 5 ppmw. The (active matter) concentration of any ignition improver present will preferably be 2600, 2000 or 1000 ppmw or less, more preferably 600 ppmw or less, such as from 300 to 1500 ppmw or from 300 to 500 ppmw.

If desired one or more additive components, such as those listed above, may be co-mixed - preferably together with suitable diluent(s) - in an additive concentrate, and the additive concentrate may then be dispersed into a diesel base fuel in order to prepare a fuel composition.

A diesel fuel additive may, for example, contain a detergent, optionally together with other components as described above, and a diesel fuel-compatible diluent, for instance a non-polar hydrocarbon solvent such as toluene, xylene, white spirits and those sold by Shell companies under the trade mark "SHELLSOL", and/or a polar solvent such as an ester or in particular an alcohol, e.g. hexanol, 2-ethylhexanol, decanol, isotridecanol and alcohol mixtures, most preferably 2-ethylhexanol. The viscosity increasing component may, in accordance with the present invention, be incorporated into such an additive formulation.

The total additive content in the fuel composition may suitably be from 50 to 10000 ppmw, preferably below 5000 ppmw.

As discussed above, it has also been found that in cases increasing the density as well as the viscosity of a diesel fuel composition can lead to improved acceleration performance in turbo charged diesel engines, in particular at low engine speeds. Thus, in an embodiment of the present invention, both a viscosity increasing component and a density increasing component may be used in the diesel fuel composition for the purpose of improving the low speed acceleration performance of a turbo charged diesel engine or of a vehicle powered by such an engine, and/or for any of the purposes described above in connection with the present invention.

A density increasing component may, for example, be selected from high density diesel fuel components, oils such as those described above for use as viscosity increasing components and high density refinery streams. A "high density" diesel fuel component might typically have a density at 15°C (ASTM D-4052) of from 0.835 to 1.2 g/cm$^3$, whilst a "high density" refinery stream might typically have a density at 15°C (ASTM D-4052) of from 0.83 to 0.9 g/cm$^3$. An oil used as a density increasing component may be a vegetable oil such as tallow oil.

In general terms, a density increasing component may have a density at 15°C (ASTM D-4052) of from 0.83 g/cm$^3$ or greater, for example from 0.83 to 1.2 g/cm$^3$.

A density increasing component may be used in the diesel fuel composition at a concentration of from 5 to 80 %v/v.

A fuel composition prepared herein thus preferably has a relatively high density, for example 0.830 g/cm$^3$ or greater at 15°C (ASTM D-4052), preferably 0.832 g/cm$^3$ or greater, such as from 0.832 to 0.860 g/cm$^3$. Suitably its density will be no higher than 0.845 g/cm$^3$ at 15°C, which is the upper limit of the current EN-590 diesel fuel specification.

Two or more density increasing components may be used in a diesel fuel composition for the purpose(s) described above.

A fuel composition prepared herein suitably also has a high calorific value. This, like a high density, can help to increase the energy content of the fuel and hence to improve performance in a diesel engine running on the fuel. Preferably, a fuel composition prepared herein has a calorific value (ASTM D-240) of 36 MJ/kg or greater, for example 40 or 42 or 42.5 MJ/kg or greater. The composition may contain one or more fuel components, or other suitable ingredients, in order to achieve a desired overall calorific value. For example, it may contain one or more Fischer-Tropsch derived "BtL" (biomass-to-liquid) fuel components.

In general terms, therefore, a fuel composition prepared herein is preferably formulated so as to increase the exhaust energy from an engine running on the composition. Thus, the composition suitably has a high volumetric energy content (high density and/or high calorific value) as well as a high viscosity.

Also described herein (referred to herein as "second aspect") is the use of a higher viscosity diesel fuel composition for the purpose of increasing, i.e. improving, the acceleration performance, at low engine speeds, of a turbo charged diesel engine into which the fuel composition is or is to be introduced or of a vehicle powered by such an engine, and/or for any one or more of the purposes described above in connection with the present invention.

A "higher viscosity" may be as compared to that of an otherwise analogous diesel fuel composition prior to the realisation, in accordance with the present invention, that a viscosity increasing component might be used to improve low speed acceleration performance, and/or prior to the introduction of a viscosity increasing component into the composition. It may be as compared to that of an otherwise analogous diesel fuel composition which is intended (e.g. marketed) for use in a turbo charged diesel engine, prior to adding a viscosity increasing component to it. It may be as compared to the average viscosity of commercially available diesel fuel compositions intended for use in the same market, as for instance determined by surveys such as the SGS Worldwide Diesel Survey. Thus, the second aspect which is also described herein involves deliberately formulating a diesel fuel composition to have a higher viscosity than before, or than conventional diesel fuel compositions.

The viscosity of the fuel composition may be in the ranges described above. It may for example have a VK 40 (ASTM D-445) of 2.7 mm$^2$/s (centistokes) or greater, for example 3 or 3.2 or 3.5 or 3.8 or 4 mm$^2$/s (centistokes) or greater.

The fuel composition may also be of a higher density, for example as compared to that of an otherwise analogous diesel fuel composition prior to the realization that a density increasing component might be used with a viscosity increasing component to improve low speed acceleration performance, and/or prior to the introduction of a density increasing component into the composition. It may be as compared to that of an otherwise analogous diesel fuel composition which is intended (e.g. marketed) for use in a turbo charged diesel engine, prior to adding a density increasing component to it.

The density of the fuel composition may be in the ranges described above, for example 0.830 g/cm$^3$ or greater at 15°C (ASTM D-4052), suitably 0.833 or 0.840 g/cm$^3$ or greater.

In the context of the second aspect described herein, "use" of a diesel fuel composition means introducing the composition into a turbo charged diesel engine, the performance of which is to be improved, and/or into the fuel tank of a vehicle powered by such an engine. The use will typically involve introducing the fuel composition into a combustion chamber of the engine. It will typically involve running the engine on the fuel composition.

Also described herein (referred to as "third aspect") is a method for preparing a diesel fuel composition, the method involving blending a viscosity increasing component with one or more diesel fuel components, optionally with one or more diesel fuel additives and optionally also with a density increasing component. This blending may be carried out for one or more of the purposes described above.

Also described herein (referred to as "fourth aspect") is a method of operating a turbo charged diesel engine, and/or a vehicle which is powered by such an engine, which method involves introducing into the engine a diesel fuel composition containing a viscosity increasing component for the purpose specified in the description above. This method may be carried out with a view to achieving improved low speed acceleration performance from the engine, and/or for any one or more of the other purposes described above in connection with the present invention.

Throughout the description and claims of this specification, the words "comprise" and "contain" and variations of the words, for example "comprising" and "comprises", mean "including but not limited to", and do not exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Preferred features of each aspect of the present invention may be as described in connection with any of the other aspects.

Other features of the present invention will become apparent from the following examples. Generally speaking, the present invention extends to any novel one, or any novel combination, of the features disclosed in this specification (including any accompanying claims and drawings). Thus features, integers, characteristics, compounds, chemical moieties or groups described in conjunction with a particular aspect, embodiment or example of the present invention are to be understood to be applicable to any other aspect, embodiment or example described herein unless incompatible therewith.

Moreover, unless stated otherwise, any feature disclosed herein may be replaced by an alternative feature serving the same or a similar purpose.

The following examples illustrate the properties of diesel fuel compositions prepared according to the present invention, and assess their effects on the performance of turbo charged diesel engines.

Example 1

These experiments investigated the effect of fuel viscosity and density on the acceleration performance of turbo charged diesel engines over a range of engine speeds, thus demonstrating how the present invention might be used to improve low speed performance.

Three diesel fuel compositions were tested. Fuel A was formulated to have the minimum viscosity and density required by the EN-590 standard (2.0 mm$^2$/s (centistokes) at 40°C and 0.820 g/cm$^3$ at 15°C respectively). Fuel B was formulated to have the minimum EN-590 density but the maximum EN-590 viscosity (4.5 mm$^2$/s (centistokes) at 40°C). Fuel C had the maximum EN-590 density (0.845 g/cm$^3$ at 15°C) and viscosity. Thus, whilst fuels A and C represented two extremes in terms of their viscosities and densities, fuel B was tested in order to de-couple the effects of viscosity and density.

In order to achieve these specifications, the three fuels were formulated as follows:

Fuel A: 41.2 litres of a Swedish Class 1 diesel base fuel (ex. Shell; density = 0.811 g/cm$^3$; VK 40 = 1.95 mm$^2$/s (centistokes)) blended with 25.8 litres of XHVI 5.2 (an extra high viscosity index base oil, ex. Shell; density = 0.81 g/cm$^3$; VK 40 typically = 4.8 mm$^2$/s (centistokes)), 13.0 litres of ShellSol™ A (ex. Shell; density typically = 0.875 g/cm$^3$; VK 40 = 0.76 mm$^2$/s (centistokes)) and 16.4 g of Paradyne™ 655 lubricity additive (ex. Paramins).

Fuel B: 37.6 litres of HVI 115 (a mineral derived high viscosity index base oil, ex. Shell; density typically = 0.875 g/cm$^3$; VK 40 typically = 3.4 mm$^2$/s (centistokes)) blended with 29.1 litres of XHVI 5.2, 4.7 litres of Ondina™ EL (ex. Shell; density = 0.85 g/cm$^3$; VK 40 = 15.5 mm$^2$/s (centistokes)), 4.4 litres of a sulphur free diesel base fuel (ex. Shell; density = 0.839 g/cm$^3$; VK 40 = 2.92 mm$^2$/s (centistokes)), 4.2 litres of Jet™ A1 (a kerosene jet fuel, ex. Shell; density = 0.797 g/cm$^3$; VK 40 = 1.11 mm$^2$/s (centistokes)) and 16.4 g of Paradyne™ 655.

Fuel C: 63.2 litres of the sulphur free diesel base fuel used in Fuel B, blended with 12.7 litres of Risella™ EL (a mineral oil, ex. Shell; density = 0.822 g/cm$^3$; VK 40 = 13.6 mm$^2$/s (centistokes)), 4.1 litres of Ondina™ EL and 16.4 g of Paradyne™ 655.

The properties of the three fuels are summarised in Table 1 below.

Table 1

| Property | Test method | Fuel A | Fuel B | Fuel C |
|---|---|---|---|---|
| Density @ 15°C (g/cm$^3$) | ASTM D-4052 | 0.8212 | 0.8203 | 0.8455 |
| Distillation (°C) | ASTM D-86 | | | |
| IBP | | 168.2 | 197.2 | 195.6 |
| 10% | | 186.1 | 243.1 | 250.9 |
| 20% | | 196.2 | 262.8 | 264.7 |
| 30% | | 208.7 | 278 | 276.8 |
| 40% | | 225.6 | 291.3 | 287.3 |
| 50% | | 244.2 | 303.3 | 297.7 |
| 60% | | 259.8 | 314.2 | 307.8 |
| 70% | | 275.1 | 324.9 | 318.2 |
| 80% | | 295.5 | 336.5 | 329.9 |
| 90% | | 327.9 | 352.4 | 346.1 |
| 95% | | 347.3 | 364.9 | 359.2 |
| FBP | | 353 | 369.5 | 362.6 |
| | | | | |
| Rec. at 240°C (%v/v) | | 47.6 | 8.9 | 4.9 |
| Rec. at 250°C (%v/v) | | 53.6 | 12.9 | 9.6 |
| Rec. at 340°C (%v/v) | | 93.1 | 82.5 | 86.9 |
| Rec. at 350°C (%v/v) | | 95.8 | 88.7 | 91.8 |
| | | | | |
| Cetane - measured | BASF | 53.9 | 68.5 | 58.2 |
| Derived cetane number | IP 498/06 | 58.8 | 69.5 | 64.1 |
| CCI | IP 364/84 | 51.6 | 64.0 | 54.3 |
| CCI | IP 380/94 | 51.5 | 69.9 | 57.2 |
| | | | | |
| VK 40 (mm$^2$/s (centistokes)) | ASTM D-445 | 1.971 | 4.057 | 4.179 |
| Cloud point (°C) | ASTM D-5773 | -20, -21 * | -4, -5 * | -14, -15 * |
| Sulphur (WDXRF) (mg/kg) | ASTM D-2622 | 5 | 53 | 27 |

(continued)

| Property | Test method | Fuel A | Fuel B | Fuel C |
|---|---|---|---|---|
| | | | | |
| Carbon (%w/w) | ASTM D-5291 | 86.1 | 85.6 | 86.3 |
| Hydrogen (%w/w) | ASTM D-5291 | 13.8 | 14.4 | 13.8 |
| Calorific value (Cal (IT)/g) : Gross Net | ASTM D-240 | 10960 10260 | 11050 10320 | 10980 10280 |
| | | | | |
| HPLC aromatics | IP 391 (mod) | | | |
| Mono (%w/w) | | 19.6 | 9.4 | 20.3 |
| Di (%w/w) | | <0.1 | 1.6 | 1.3 |
| Tri (%w/w) | | <0.1 | 0.2 | 0.1 |
| Total (%w/w) | | 19.6 | 11.2 | 21.7 |
| | | | | |
| Lubricity (micron) | ISO 12156 | 377,420 | 220, 218 | 311,365 |
| * repeat measurements | | | | |

Two vehicles were used in the tests, to demonstrate the use of the present invention in different types of turbo charged compression ignition (diesel) engine and with different engine management systems (EMSs). The key properties of the two vehicles are summarised in Table 2 below.

Table 2

| | Engine 1 | Engine 2 |
|---|---|---|
| Name | Toyota™ Avensis™ 2.0 D4-D | Vauxhall GM™ Vectra™ 1.9 CDTi |
| Engine description | D4-D engine design released 2003 | New Fiat/GM™ collaboration engine in 2003 |
| Engine code/ displacement/ layout | 1CD-FTV/2.0/4L | Z19-DTH/1.9/4L |
| Output (kW) | 81 | 110 |
| Fuel injection system | Common rail | Common rail |
| EMS | Denso™ | Bosch™ EDC 16 |

The vehicle set-up procedure was as follows. Prior to testing, all the test vehicles were safety checked. All were fitted with fuel lines to enable fuelling from an external source and to enable easier fuel changing.

As part of the vehicle selection process, checks had been made to ensure that the charge air pressure, injection volume, common rail pressure, injection timing and engine speed could all be logged from the engine management system (EMS) using on-board diagnostic (OBD) tools.

In the case of the Vauxhall™ Vectra™, all EMS parameters were available using the manufacturer's EMS tool (Tech-II). In the case of the Toyota™ Avensis™, despite all parameters being available, only four could be recorded at any one time to give a sufficient recording resolution, these parameters being recorded using the manufacturer's EMS tool (Toyota/Denso™ Intelligent Tester). Due to this more limited EMS recording capacity, certain changes had to be made to the testing sequence for the Toyota™ engine; in particular, power runs were conducted in duplicate in order to allow for injection timing to be logged during the second run.

The engine test procedure for each vehicle was as follows. The vehicle was driven up to the chosen start speed and placed in the desired gear. Wide open throttle (WOT) was then applied and an 8 minute period of stabilisation was run. This stabilisation allowed for the portable dynamometer used to attain control of the roll speed, as a small initial overshoot of the lower speed gate occurs at the point of applying WOT, due to the sudden vehicle loading on the dynamometer.

Following the stabilisation period, the measured part of the procedure commenced. Power curve measurement entailed driving the dynamometer from a low speed set point (40 km/h, matching a low typical engine speed) to a high speed set point (140 km/h, matching a high typical engine speed), in a fixed time (18 seconds), at a constant acceleration rate. During the test, the vehicle's accelerator pedal was held at 100% and the dynamometer absorbed the power produced by the vehicle as it accelerated through the engine speed range. Power at the rolls was recorded at a high acquisition rate (~50 Hz) throughout the power curve.

The test sequence was designed to test each fuel four times over a single day period in each of the vehicles. This gave a randomised twelve-fuel matrix for each day with a natural break in the middle:

```
Daily test order = A B C B C A - C A B A B C.
```

Using this fuel test sequence, testing was completed following the protocol in Table 3 below.

Table 3

| Stage | Description | Fuel |
|-------|-------------|------|
| 1 | Vehicle & dynamometer warm-up | Tank |
| 2 | Fuel flush & stabilisation | A |
| 3 | Power curve + EMS log (x 1) | A |
| 4 | Fuel flush & stabilisation | B |
| 5 | Power curve + EMS log (x 1) | B |
| 6 | Etc... (repeated according to fuel sequence) | |

The results obtained during the 18 second acceleration period are shown in Tables 4 to 9 below. Of these:

• Tables 4 and 5 show how the engine power output and torque varied with engine speed for the Toyota™ and Vauxhall™ engines respectively, in each case for the three fuels A, B and C.

• Tables 6 and 7 show how the charge air pressure (boost pressure) varied with engine speed for the Toyota™ and Vauxhall™ engines respectively, again in each case for fuels A, B and C.

• Tables 8 and 9 show how the fuel injection volume/quantity varied with engine speed for the Toyota™ and Vauxhall™ engines respectively, in each case for the fuels A, B and C.

Table 4

| | Fuel A | | Fuel B | | Fuel C | |
|---|--------|---|--------|---|--------|---|
| Engine speed (rpm) | Power (kW) | Torque (Nm) | Power (kW) | Torque (Nm) | Power (kW) | Torque (Nm) |
| 1100 | 14.51 | 126.0 | 14.83 | 128.8 | 14.75 | 128.1 |
| 1200 | 16.36 | 130.2 | 16.70 | 133.0 | 16.69 | 132.9 |
| 1400 | 21.94 | 149.7 | 22.68 | 154.8 | 22.80 | 155.6 |
| 1600 | 29.87 | 178.4 | 30.91 | 184.6 | 31.35 | 187.2 |
| 1650 | 31.78 | 184.0 | 33.13 | 192.0 | 33.55 | 194.1 |
| 1700 | 33.90 | 190.5 | 34.95 | 196.3 | 35.25 | 198.1 |
| 1750 | 35.83 | 195.6 | 40.68 | 222.2 | 42.35 | 231.3 |
| 1800 | 41.42 | 219.8 | 43.29 | 229.8 | 43.81 | 232.5 |
| 1850 | 42.65 | 220.3 | 42.75 | 220.7 | 43.53 | 224.8 |

(continued)

|  | Fuel A | | Fuel B | | Fuel C | |
|---|---|---|---|---|---|---|
| Engine speed (rpm) | Power (kW) | Torque (Nm) | Power (kW) | Torque (Nm) | Power (kW) | Torque (Nm) |
| 1900 | 42.98 | 216.2 | 44.23 | 222.4 | 45.33 | 227.8 |
| 2000 | 46.75 | 223.3 | 47.92 | 228.9 | 48.40 | 231.2 |
| 2200 | 51.21 | 222.4 | 52.55 | 228.2 | 48.44 | 231.3 |
| 3000 | 64.33 | 204.9 | 66.24 | 211.0 | 66.66 | 212.3 |
| 3800 | 66.90 | 168.2 | 70.48 | 177.2 | 71.04 | 178.6 |

Table 5

|  | Fuel A | | Fuel B | | Fuel C | |
|---|---|---|---|---|---|---|
| Engine speed (rpm) | Power (kW) | Torque (Nm) | Power (kW) | Torque (Nm) | Power (kW) | Torque (Nm) |
| 1200 | 15.28 | 121.6 | 16.84 | 134.1 | 16.51 | 131.4 |
| 1400 | 18.33 | 125.1 | 19.01 | 129.7 | 19.13 | 130.5 |
| 1600 | 20.85 | 124.5 | 22.36 | 133.5 | 22.49 | 134.3 |
| 1800 | 30.99 | 164.5 | 30.62 | 162.5 | 32.24 | 171.1 |
| 1850 | 33.30 | 172.1 | 34.20 | 176.6 | 35.18 | 181.7 |
| 1900 | 36.05 | 181.4 | 37.67 | 189.3 | 38.58 | 193.9 |
| 1950 | 39.03 | 191.3 | 41.47 | 203.2 | 41.85 | 205.1 |
| 2000 | 42.08 | 201.0 | 44.37 | 212.0 | 46.43 | 221.8 |
| 2050 | 45.25 | 210.7 | 53.70 | 250.2 | 54.85 | 255.7 |
| 2100 | 51.68 | 235.2 | 58.27 | 265.1 | 59.00 | 268.3 |
| 2150 | 57.10 | 253.5 | 62.20 | 276.4 | 63.05 | 280.2 |
| 2200 | 61.68 | 267.9 | 64.20 | 278.7 | 64.23 | 278.8 |
| 2250 | 64.03 | 271.8 | 64.30 | 273.0 | 64.60 | 274.4 |
| 2300 | 65.30 | 271.3 | 65.47 | 271.7 | 65.75 | 273.1 |
| 2350 | 66.48 | 270.2 | 66.63 | 270.8 | 67.40 | 274.2 |
| 2400 | 68.03 | 270.7 | 68.43 | 272.3 | 68.73 | 273.6 |
| 2600 | 72.10 | 264.8 | 73.90 | 271.7 | 74.65 | 274.4 |
| 2800 | 75.33 | 257.0 | 77.63 | 265.0 | 77.90 | 266.0 |
| 3000 | 81.58 | 259.7 | 83.17 | 264.8 | 83.38 | 265.5 |
| 4000 | 91.00 | 217.3 | 92.87 | 221.7 | 93.70 | 223.8 |

Table 6

|  | Fuel A | Fuel B | Fuel C |
|---|---|---|---|
| Engine speed (rpm) | Boost (kPa) | Boost (kPa) | Boost (kPa) |
| 1100 | 120.5 | 121.2 | 121.2 |
| 1200 | 122.5 | 124.4 | 124.4 |
| 1400 | 133.9 | 135.2 | 135.8 |

(continued)

|  | Fuel A | Fuel B | Fuel C |
|---|---|---|---|
| Engine speed (rpm) | Boost (kPa) | Boost (kPa) | Boost (kPa) |
| 1600 | 150.8 | 154.3 | 155.2 |
| 1800 | 177.8 | 182.3 | 182.4 |
| 2000 | 177.5 | 179.1 | 179.2 |
| 2200 | 174.6 | 175.8 | 176.0 |
| 3000 | 177.2 | 178.8 | 179.1 |
| 3800 | 183.5 | 188.1 | 189.8 |

Table 7

|  | Fuel A | Fuel B | Fuel C |
|---|---|---|---|
| Engine speed (rpm) | Boost (kPa) | Boost (kPa) | Boost (kPa) |
| 1200 | 121.0 | 124.0 | 124.0 |
| 1400 | 130.0 | 131.8 | 132.0 |
| 1600 | 147.4 | 151.0 | 151.1 |
| 1800 | 177.4 | 182.8 | 183.4 |
| 2000 | 213.4 | 226.6 | 228.8 |
| 2200 | 230.2 | 220.6 | 220.5 |
| 3000 | 233.0 | 233.0 | 233.0 |
| 4000 | 234.0 | 234.0 | 234.0 |

Table 8

|  | Fuel A | Fuel B | Fuel C |
|---|---|---|---|
| Engine speed (rpm) | Injection quantity ($mm^3$/ stroke) | Injection quantity ($mm^3$/ stroke) | Injection quantity ($mm^3$/ stroke) |
| 1100 | 38.9 | 39.2 | 39.3 |
| 1200 | 39.5 | 40.0 | 40.0 |
| 1400 | 41. 6 | 42.5 | 42.7 |
| 1600 | 47.5 | 48.5 | 48.7 |
| 1800 | 56.5 | 58.2 | 58.5 |
| 2000 | 57.1 | 57.5 | 57.7 |
| 2200 | 56.3 | 56.7 | 56.7 |
| 3000 | 56.3 | 56.7 | 56.8 |
| 3800 | 50.4 | 51.1 | 51.3 |

Table 9

| Engine speed (rpm) | Fuel A | Fuel B | Fuel C |
| --- | --- | --- | --- |
| | Injection quantity (mm$^3$/stroke) | Injection quantity (mm$^3$/stroke) | Injection quantity (mm$^3$/stroke) |
| 1200 | 42.6 | 43.5 | 43.4 |
| 1400 | 42.6 | 43.4 | 43.5 |
| 1600 | 48.5 | 50.5 | 50.9 |
| 1800 | 57.3 | 61.5 | 63.6 |
| 2000 | 72.1 | 72.7 | 73.0 |
| 2200 | 72.0 | 72.0 | 72.0 |
| 3000 | 67.9 | 67.9 | 67.9 |
| 4000 | 60.6 | 60.6 | 60.6 |

Note that EMS data were recorded using the appropriate OEM (original equipment manufacturer) OBD communication tools. Accordingly, the accuracy of the sensors used and thus the reliability of the measurements is unknown. In particular, injection volumes were inferred from injection pulse widths, calculated injector flow rates and assumed fuel properties; they cannot, therefore, be used to quantify injected quantities but can help to identify directional trends in fuel injection volumes.

Note also that the Tech II tool used to interrogate the EMS of the Vauxhall™ engine suffered periods of hang up during all test runs, despite its relatively high logging rate (~20 Hz). Thus, whilst for the Toyota™ tests, average data values were produced from all test runs completed on each fuel, the Vauxhall™ data are presented for all completed test runs so as to give a better visual indication of EMS behaviour, since averaging the incomplete data set could prove misleading.

The data in Tables 4 to 9 show clear differences in engine performance dependent on the fuel type. In relation to the power measurements, for example, a performance benefit is evident throughout the acceleration period for the two higher viscosity fuels B and C in comparison to the more conventional fuel A. This benefit is particularly noticeable at lower engine speeds, where the engines can be seen to achieve their maximum power output (and torque) at a lower engine speed when running on fuels B and C than when using fuel A.

A charge air pressure advantage is also evident with fuels B and C relative to the lower viscosity fuel A. For the Toyota™ engine this advantage is present throughout the power curve, whereas for the Vauxhall™, pressure differences appear to be lost once charge air regulation begins (i.e. at higher engine speeds). However, for both engines the initial peak in pressure occurs at a lower engine speed when using the two higher viscosity fuels.

An injection volume increase is also apparent when using fuels B and C in comparison to A, this increase being present across the entire engine speed range for the Toyota™ engine and up to commencement of charge air regulation for the Vauxhall™.

Of the two higher viscosity fuels, the higher density fuel C appears in general to provide the greater performance advantage, in particular at low speeds.

The same effect is observed for both of the engines tested, despite the fact that different makes of engine, and different types of engine management system, were involved.

In order to quantify these performance benefits the power curves can be split into two distinct parts. Firstly, a low speed range is defined as the point from the start of the power curve up to the point when charge air pressure regulation becomes apparent. The point of regulation can be defined as the first point at which boost pressure stops increasing. Boost profiles assembled from data generated during the above tests show that air pressure regulation occurs later (i.e. at a higher engine speed) when using the low viscosity, low density fuel A than when using fuels B and C. The second, high speed range is defined as the point of commencement of boost regulation to the end of the power curve.

Using the assembled data, low and high speed ranges were therefore defined, for both of the test vehicles and for each of the fuels, to assist with subsequent data analysis. These ranges are shown in Tables 10 and 11 for the Toyota™ and the Vauxhall™ engines respectively.

Table 10

| Region | Rev/min range | Fuel |
|---|---|---|
| Low speed | 1200 - 1830 | A |
| | 1200 - 1790 | B + C |
| High speed | 1830 - 3950 | A |
| | 1790 - 3950 | B + C |

Table 11

| Region | Rev/min range | Fuel |
|---|---|---|
| Low speed | 1200 - 2100 | A |
| | 1200 - 2050 | B + C |
| High speed | 2100 - 4100 | A |
| | 2050 - 4100 | B + C |

Using the data assembled as described above, the average power development for each engine, over each of the two speed ranges, was then determined for the three test fuels. The results are shown in Tables 12 to 15 below, of which Table 12 contains the low speed power data for the Toyota™ engine, Table 13 the high speed power data for the Toyota™ engine and Tables 14 and 15 the low and high speed data respectively for the Vauxhall™ engine.

Table 12

| | | Average power (kW) | |
|---|---|---|---|
| Fuel | A | B | C |
| Run 1 | 26.20 | 26.87 | 28.07 |
| Run 2 | 27.17 | 27.04 | 27.78 |
| Run 3 | 27.71 | 27.60 | 28.03 |
| Run 4 | 27.73 | 28.32 | 27.96 |
| % benefit relative to fuel A | | 0.92 | 2.72 |
| Average (kW) | 27.20 | 27.45 | 27.96 |
| Confidence limit (kW) | 1.00 | 0.91 | 0.18 |

Table 13

| | | Average power (kW) | |
|---|---|---|---|
| Fuel | A | B | C |
| Run 1 | 58.95 | 60.44 | 61.42 |
| Run 2 | 59.50 | 60.45 | 61.39 |
| Run 3 | 59.95 | 61.08 | 61.67 |
| Run 4 | 59.64 | 61.63 | 61.47 |
| % benefit relative to fuel A | | 2.29 | 3.22 |
| Average (kW) | 59.51 | 60.90 | 61.49 |
| Confidence limit (kW) | 0.58 | 0.79 | 0.18 |

Table 14

| | | Average power (kW) | |
|---|---|---|---|
| Fuel | A | B | C |
| Run 1 | 24.04 | 25.04 | 26.58 |
| Run 2 | 25.13 | 25.61 | 25.83 |
| Run 3 | 25.58 | 26.01 | 26.35 |
| Run 4 | 25.06 | n/a* | 26.96 |
| % benefit relative to fuel A | | 2.34 | 5.59 |
| Average (kW) | 24.95 | 25.55 | 26.43 |
| Confidence limit (kW) | 0.91 | 0.90 | 0.66 |

Table 15

| | | Average power (kW) | |
|---|---|---|---|
| Fuel | A | B | C |
| Run 1 | 80.06 | 81.51 | 82.04 |
| Run 2 | 80.96 | 81.55 | 81.69 |
| Run 3 | 80.78 | 81.77 | 82.00 |
| Run 4 | 80.49 | n/a* | 82.26 |
| % benefit relative to fuel A | | 1.27 | 1.74 |
| Average (kW) | 80.57 | 81.61 | 82.00 |
| Confidence limit (kW) | 0.54 | 0.25 | 0.33 |
| * (Run 4B not included in analysis due to the EMS entering a regeneration event during testing.) | | | |

Tables 12 and 14 show a clear advantage in power development, in the low speed range, when using fuels B and C, despite the large error bars for both fuels A and B which result from scatter between individual test runs.

As seen in Tables 13 and 15, an advantage in power development is also provided by fuels B and C in the high speed range. The margin of benefit during the high speed section is somewhat greater than that in the low speed area of the power curve.

Other data recorded during the above tests showed (a) broadly similar average common rail pressure profiles, across the entire speed range, for all three fuels and (b) no difference in injection timing between the three test fuels.

It is of note that in the above tests, larger performance benefits were observed with the Toyota™ than with the Vauxhall™ engine across the engine speed range. In the lower speed range, the higher exhaust energy present with the higher density and viscosity fuels leads to increased turbo charger speed and thus a higher charge air pressure in both vehicles. The EMS recognises this advantage and the injected fuel quantity is increased. Consequently, peak torque is reached at a lower engine speed. In the higher speed range, charge air pressure is controlled in the Vauxhall™ by the Bosch™ EMS, by appropriate adjustment of the VGT (variable geometry turbine), to eliminate boost differences between fuels. This in turn eliminates the differences in pressure which are seen in the lower speed range. Similarly, the advantages in injected fuel quantity are also eliminated in the higher speed range for the Vauxhall™ engine. In the Toyota™ engine, in contrast, a higher charge air pressure is maintained with the higher density and/or viscosity fuels across the high speed as well as the low speed range. Consequently, a higher injected fuel quantity is also maintained across the entire range, and the resultant mean power benefit is larger for this car than for the Vauxhall™.

Given the level of sophistication of modern EMS systems, however, it is surprising to see so significant a benefit in acceleration performance in response to changes in fuel properties. It is also surprising that, at least in the lower engine speed ranges, the benefit is observed for different types and makes of engine and in particular engine management system.

The performance benefits demonstrated in these tests are likely to be manifested, in use, as faster full load acceleration. In other words, the driver of the engine should perceive a so-called "pick-up" benefit under full load acceleration. In particular, in the case of a higher density fuel, this effect might well be noticeable right across the engine speed range due to the higher injected mass, but the effect is likely to be emphasised at lower engine speeds and in particular around the peak torque value (typically around 2000 rpm), peak torque being reached - by means of the present invention - more quickly and at a lower engine speed.

As discussed above, it is believed that the effects underlying the present invention may be due to the following mechanism. A higher viscosity, suitably also higher density, fuel will give an increase in injected fuel mass, and in turn an increase in exhaust energy. This energy will be harnessed by the turbo charger, which will then deliver a higher charge air pressure at lower engine speed. The charge air pressure increase will be recognised by the EMS, which will increase the injected fuel volume (via pulse width) so as to utilise the extra charge air, thus increasing power yet further. The result is that peak engine torque can be reached at a lower engine speed due to the enhanced turbo charger performance.

Similar effects to those described above, i.e. improvements in low speed acceleration performance due to increased fuel viscosity, have also been observed in tests on other turbo charged diesel engines, including those described in Examples 2 and 3 below.

The benefit in power which is evident for fuels B and C relative to A can be related to the fuel densities and viscosities using linear regression analysis on the mean power data. A summary of this analysis is given below.

With regard firstly to the Toyota™ engine, looking solely at the data from the high speed range (as performance here is less transient), Table 16 below shows the data used in analysis.

Table 16

| Fuel | Test no. | Average power (kW) | Density at 15°C (g/cm$^3$) (ASTM D-4052) | Viscosity at 40°C (mm$^2$/s (cSt)) (ASTM D-445) |
|---|---|---|---|---|
| A | 1 | 58.95 | 0.8212 | 1.971 |
| B | 1 | 60.44 | 0.8203 | 4.057 |
| C | 1 | 61.42 | 0.8455 | 4.179 |
| A | 2 | 59.50 | 0.8212 | 1.971 |
| B | 2 | 60.45 | 0.8203 | 4.057 |
| C | 2 | 61.39 | 0.8455 | 4.179 |
| A | 3 | 59.95 | 0.8212 | 1.971 |
| B | 3 | 61.08 | 0.8203 | 4.057 |
| C | 3 | 61.67 | 0.8455 | 4.179 |
| A | 4 | 59.64 | 0.8212 | 1.971 |
| B | 4 | 61.63 | 0.8203 | 4.057 |
| C | 4 | 61.47 | 0.8455 | 4.179 |

Linear regression analysis of the Toyota™ high speed range power data gave the results shown in Table 17 below.

Table 17

| | Coefficients | Standard error | t Stat | P-value | Lower 95% | Upper 95.0% |
|---|---|---|---|---|---|---|
| Intercept | 41.718 | 9.698 | 4.302 | 0.002 | 19.779 | 63.657 |
| Density | 20.046 | 11.980 | 1.673 | 0.129 | -7.054 | 47.146 |
| Viscosity | 0.675 | 0.138 | 4.891 | 0.001 | 0.363 | 0.987 |

This gives a regression coefficient related to density of 20.05 at 87.1% confidence level (P=0.129), and also a regression coefficient for viscosity of 0.675 at 99.9% confidence level (P=0.001). This analysis shows that a significant power benefit (95% confidence) comes from increasing fuel viscosity.

To quantify the coefficients in absolute terms, a 1 mm$^2$/s (centistokes) increase in fuel viscosity would result in a power increase of approximately 0.68 kW in the Toyota™ engine tested. A 10 kg/m$^3$ (0.010 g/cm$^3$) increase in fuel density would yield an increase in power of 0.20 kW.

With regard to the Vauxhall™ engine, again looking solely at the data from the high speed range, Table 18 below shows the data used in analysis.

Table 18

| Fuel | Test no. | Average power (kW) | Density at 15°C (g/cm$^3$) (ASTM D-4052) | Viscosity at 40°C (cSt) (ASTM D-445) |
|---|---|---|---|---|
| A | 1 | 80.06 | 0.8212 | 1.971 |
| B | 1 | 81.51 | 0.8203 | 4.057 |
| C | 1 | 82.51 | 0.8455 | 4.179 |
| A | 2 | 80.96 | 0.8212 | 1.971 |
| B | 2 | 81.55 | 0.8203 | 4.057 |
| C | 2 | 81.69 | 0.8455 | 4.179 |
| A | 3 | 80.78 | 0.8212 | 1.971 |
| B | 3 | 81.77 | 0.8203 | 4.057 |
| C | 3 | 82.00 | 0.8455 | 4.179 |
| A | 4 | 80.49 | 0.8212 | 1.971 |
| B | 4 | 81.6* | 0.8203 | 4.057 |
| C | 4 | 82.26 | 0.8455 | 4.179 |

\* (Run B4 is derived as the mean of tests B1, B2 and B3, as a real value was needed in order to complete a regression analysis. No true value was in fact recorded for test B4 as the EMS entered a regeneration event during testing.)

Linear regression analysis for the Vauxhall™ high speed power data gave the results shown in Table 19.

Table 19

| | Coefficients | Standard error | t Stat | P-value | Lower 95% | Upper 95.0% |
|---|---|---|---|---|---|---|
| Intercept | 65.128 | 7.274 | 8.953 | 0.000 | 48.672 | 81.584 |
| Density | 17.595 | 8.986 | 1.958 | 0.082 | -2.732 | 37.922 |
| Viscosity | 0.505 | 0.104 | 4.878 | 0.001 | 0.271 | 0.739 |

This gives a regression coefficient related to density of 17.60 at 91.8% confidence level (P=0.082), and also a regression coefficient for viscosity of 0.505 at 99.9% confidence level (P=0.001). Again, this analysis shows a significant power benefit (95% confidence) from viscosity increase.

To quantify the coefficients in absolute terms, a 1 mm$^2$/s (centistokes) increase in fuel viscosity would result in a power increase of approximately 0.51 kW in the Vauxhall™ engine. A 10 kg/m$^3$ (0.010 g/cm$^3$) increase in fuel density would yield an increase in power of 0.18 kW.

Due to the similarity of the vehicle responses to fuel viscosity and density, it is appropriate to perform a combined regression analysis on the two vehicles. This results in regression coefficients for viscosity of 0.60 KW/(mm$^2$/s) (kW/centistokes) and for density of 19 kW/(g/cm$^3$). Both coefficients are significant at well above 95% confidence.

Example 2

Experiments analogous to those of Example 1 were carried out on an Audi™ car equipped with a turbo charged unit injector diesel engine and a Bosch™ EMS.

Two diesel fuel compositions were tested, Fuel D having a viscosity and density at the lower end of the EN-590 diesel fuel specification (2.0 mm$^2$/s (centistokes) at 40°C (ASTM D-445) and 0.821 g/cm$^3$ at 15°C (ASTM D-4052) respectively) and Fuel E a viscosity and density at the upper end of the specification (4.0 mm$^2$/s (centistokes) at 40°C and 0.845 g/cm$^3$ at 15°C respectively). These compositions had been formulated as shown below.

Fuel D: 308.8 litres of a Swedish Class 1 diesel base fuel (ex. Shell; density = 0.811 g/cm$^3$; VK 40 = 1.95 mm$^2$/s (centistokes)) blended with 193.8 litres of XHVI 5.2, 97.4 litres of ShellSol™ A (ex. Shell) and 123.2 g of Paradyne™ 655.

Fuel E: 159.7 litres of a zero sulphur diesel base fuel (ex. Shell; density = 0.832 g/cm$^3$; VK 40 = 2.86 mm$^2$/s (centistokes)) blended with 169.8 litres of XHVI 5.2, 19.6 litres of a Fischer-Tropsch derived (GtL) diesel fuel (ex. Shell; density = 0.7846 g/cm$^3$; VK 40 = 3.497 mm$^2$/s (centistokes)), 225.8 litres of HVI 115, 25.0 litres of Ondina™ EL (ex. Shell) and 126.3 g of Paradyne™ 655.

Acceleration performance was measured using a portable chassis dynamometer, whilst also measuring power at steady state full load conditions, at 2000, 2600 and 3300 rpm. VAGCOM™ software (ex. Volkswagen AG) was used to log engine speed, injection quantity, injection timing, mass air flow, ambient pressure and boost pressure (VAGCOM™ designation: measuring blocks 1, 4 and 10) .

The results are shown in Tables 20 and 21 below, of which Table 20 shows how the injected fuel quantities and turbo boost pressures varied with engine speed, for both fuels, and Table 21 shows how the engine torque and power varied with engine speed.

Table 20

| Engine speed (rpm) | Injected fuel quantity (mg/ stroke) | | Turbo boost pressure (mBar) | |
|---|---|---|---|---|
| | Fuel D | Fuel E | Fuel D | Fuel E |
| 1100 | 32.9 | 34.2 | 1255 | 1314 |
| 1200 | 33.5 | 34.7 | 1262 | 1363 |
| 1400 | 36.9 | 39.5 | 1360 | 1581 |
| 1600 | 44.3 | 52.2 | 1594 | 1969 |
| 1800 | 58.3 | 60.4 | 1982 | 2419 |
| 2000 | 59.4 | 59.5 | 2440 | 2237 |
| 2200 | 59.3 | 59.3 | 2242 | 2414 |
| 3000 | 55.1 | 55.1 | 2344 | 2322 |
| 4000 | 49.0 | 49.0 | 2174 | 2220 |

Table 21

| Engine speed (rpm) | Torque (Nm) | | Power (kW) | |
|---|---|---|---|---|
| | Fuel D | Fuel E | Fuel D | Fuel E |
| 1100 | 126.1 | 127.7 | 14.5 | 14.7 |
| 1200 | 130.2 | 135.3 | 16.4 | 17.0 |
| 1400 | 149.3 | 158.2 | 21.9 | 23.2 |
| 1600 | 184.3 | 202.6 | 30.9 | 34.0 |
| 1800 | 253.1 | 284.7 | 47.7 | 53.7 |
| 2000 | 288.8 | 290.7 | 60.5 | 60.9 |
| 2200 | 289.7 | 303.8 | 66.7 | 70.0 |
| 3000 | 277.5 | 348.5 | 87.2 | 73.6 |
| 4000 | 218.2 | 509.3 | 91.4 | 95.1 |

Again these data show a clear performance benefit from using the higher viscosity, higher density Fuel E, the differences between the two fuels being particularly marked at lower engine speeds. Peak torque and turbo boost pressure were reached at a lower engine speed when using Fuel E. Injection quantities were also significantly higher when using Fuel E, over the low speed range up until commencement of boost regulation (which occurred at a lower engine speed using Fuel E (around 1800 rpm) as compared to Fuel D (around 1950 rpm)).

Example 3

Experiments analogous to those of Example 1 were carried out on further turbo charged vehicles:

a) a Volkswagen™ Passat™ 2.5 V6 TDI, first registered in 2004, equipped with a rotary distribution pump Bosch™ injection system;
b) a GM™ Corsa™ 1.3 CDTi, first registered in 2005, equipped with a common rail diesel engine and a Bosch™ EMS; and
c) a BMW™ 320D SE, first registered in 2004, equipped with a common rail diesel engine and a Bosch™ EMS.

Two test fuel compositions were used. Fuel F (low power) had a viscosity of 1.473 mm$^2$/s (centistokes) at 40°C (ASTM D-445), a density of 0.8222 g/cm$^3$ at 15°C (ASTM D-4052) and a lower heating value (ASTM D-240) of 42.73 MJ/kg. Fuel G (high power) had a viscosity of 4.527 mm$^2$/s (centistokes) at 40°C, a density of 0.8413 g/cm$^3$ at 15°C and a lower heating value of 43.07 MJ/kg. These compositions had been formulated as shown below.

Fuel F: 57.9 litres of ShellSol™ A blended with 435.8 litres of kerosene (ex. Shell; density = 0.799 g/cm$^3$; VK 40 = 1.14 mm$^2$/s (centistokes)) and 106.3 litres of Risella™ EL (a mineral oil, ex. Shell; density = 0.822 g/cm$^3$; VK 40 = 13.6 mm$^2$/s (centistokes)).

Fuel G: 166.6 litres of odourless kerosene (ex. Shell; density = 0.788 g/cm$^3$; VK 40 ~ 1.1 mm$^2$/s (centistokes)) blended with 21.5 litres of XHVI 5.2, 126.8 litres of a high boiling diesel base fuel (ex. Shell; density = 0.835 g/cm$^3$; VK 40 = 4.01 mm$^2$/s (centistokes)) and 285.8 litres of Risella™ EL.

Table 22 below shows, for each of the vehicles tested, the percentage power benefit and the percentage boost pressure increase when using Fuel G as compared with Fuel F.

Table 22

| Engine Speed | VW™ Passat™ | | GM™ Corsa™ | | BMW™ | |
|---|---|---|---|---|---|---|
| | Power benefit (%) | Boost pressure increase (%) | Power benefit (%) | Boost pressure increase (%) | Power benefit (%) | Boost pressure increase (%) |
| 1300 | 2.4 | 7.2 | 1.2 | 2.9 | 1.3 | 4.6 |
| 1500 | 4.6 | 9.1 | 2.4 | 4.1 | 2.6 | 5.9 |
| 1700 | 6.6 | 9.3 | 4.7 | 4.0 | 3.3 | -1.1 |
| 1900 | 7.2 | 4.2 | 4.4 | 4.1 | 2.6 | 0.0 |
| 2100 | 7.0 | -1. 6 | 3.9 | 1.4 | 3.1 | 0.0 |
| 2300 | 6.5 | 0.1 | 3.3 | 0.6 | 2.6 | 0.8 |
| 3000 | 6.7 | -0.8 | 2.9 | 0.4 | 1.5 | -0.3 |
| 4000 | 5.7 | 0.2 | 4.5 | -0.2 | 1.0 | 0.0 |

As for the other engines tested, the higher viscosity and density Fuel G was found to give significant improvements in acceleration performance at lower engine speeds. As for the Vauxhall™ engine tested in Example 1, the differences in performance between the two test fuels became, on the whole, less if at all noticeable at higher engine speeds.

At lower engine speeds the higher viscosity and density test fuel resulted in a higher boost pressure, and an earlier maximum boost pressure, than when using the lower viscosity and density fuel.

For the BMW™ engine, for example, between engine speeds of about 1300 and 1700 rpm, the difference in engine power between the two test fuels increased rapidly, up to about 3% or greater at around 1700 rpm. This is likely to be due to positive feedback from the turbo charger, which as described above was allowed to ramp up uncontrolled. In this speed range the boost pressure was also significantly (up to nearly 6%) higher with the higher viscosity and density Fuel G. At higher speeds, these differences disappeared, as the boost pressure became more tightly controlled by the EMS. Similar trends were observed in all of the engines tested.

On performing analogous experiments using a range of other vehicles, similar effects were observed: a higher viscosity and density fuel caused significant improvements in acceleration performance at lower engine speeds, at least up until the point when EMS regulation of the charge air pressure began. The engines tested included turbo charged EUI, common rail and rotary distribution pump diesel engines, with either Bosch™, Delphi™, Denso™ or Fiat™ engine management systems. The test vehicles included Volkswagen™, Toyota™, Ford™, Renault™, GM™, Honda™, Mercedes™, BMW™, Fiat™, Peugeot™ and Audi™ makes.

**Claims**

1. Use of a viscosity increasing component in a diesel fuel composition, for the purpose of reducing the engine speed of a turbo charged diesel engine into which the fuel composition is, or is to be, introduced, or of a vehicle powered by such an engine, at which the turbo charger reaches its maximum speed when accelerating at an engine speed from 1200 to 2200 rpm, wherein the viscosity increasing component is selected from a Fischer-Tropsch derived fuel component, an oil, a fatty acid alkyl ester and combinations thereof.

2. Use according to claim 1, wherein the engine speed is from 1200 to 2000 rpm.

3. Use according to claim 2, wherein the engine speed is from 1200 to 1900 rpm.

4. Use according to any one of the preceding claims, which is for the purpose of mitigating, to at least a degree, a deterioration in the acceleration performance of the engine due to another cause.

5. Use according to any one of the preceding claims, wherein the kinematic viscosity at 40°C (VK 40) of the diesel fuel composition, including the viscosity increasing component used in it, is 2.8 mm$^2$/s (centistokes) or greater.

6. Use according to claim 5, wherein the oil is a Fischer-Tropsch derived oil.

7. Use according to any one of the preceding claims, wherein a density increasing component is used in the diesel fuel composition together with the viscosity increasing component.

**Patentansprüche**

1. Verwendung einer viskositätserhöhenden Komponente in einer Dieselkraftstoffzusammensetzung zum Zwecke des Reduzierens der Motordrehzahl eines turbogeladenen Dieselmotors, in den die Kraftstoffzusammensetzung eingeführt wird oder einzuführen ist, oder eines von einem derartigen Motor angetriebenen Fahrzeugs, bei der der Turbolader beim Beschleunigen mit einer Motordrehzahl von 1200 bis 2200 min$^{-1}$ seine Höchstdrehzahl erreicht, wobei die viskositätserhöhende Komponente aus einer von einem Fischer-Tropsch-Verfahren abgeleiteten Kraftstoffkomponente, einem Öl, einem Fettsäurealkylester und Kombinationen daraus ausgewählt ist.

2. Verwendung nach Anspruch 1, wobei die Motordrehzahl 1200 bis 2000 min$^{-1}$ beträgt.

3. Verwendung nach Anspruch 2, wobei die Motordrehzahl 1200 bis 1900 min$^{-1}$ beträgt.

4. Verwendung nach einem der vorhergehenden Ansprüche, die dem Zwecke des Milderns, wenigstens zu einem Maß, einer Verschlechterung der Beschleunigungsleistung des Motors aufgrund einer anderen Ursache dient.

5. Verwendung nach einem der vorhergehenden Ansprüche, wobei die kinematische Viskosität bei 40 °C (VK 40) der Dieselkraftstoffzusammensetzung, einschließlich der darin verwendeten viskositätserhöhenden Komponente, wenigstens 2,8 mm$^2$/s (Zentistokes) beträgt.

6. Verwendung nach Anspruch 5, wobei das Öl ein von einem Fischer-Tropsch-Verfahren abgeleitetes Öl ist.

7. Verwendung nach einem der vorhergehenden Ansprüche, wobei eine dichteerhöhende Komponente in der Dieselkraftstoffzusammensetzung gemeinsam mit der viskositätserhöhenden Komponente verwendet wird.

**Revendications**

1. Utilisation d'un composant augmentant la viscosité dans une composition de carburant diesel, aux fins de réduire le régime moteur d'un moteur diesel à turbocompresseur dans lequel la composition de carburant est, ou doit être, introduite, ou d'un véhicule propulsé par un moteur de ce type, à laquelle le turbocompresseur atteint sa vitesse maximale lors d'une accélération à un régime moteur de 1 200 à 2 200 tr/min, dans laquelle le composant augmentant la viscosité est sélectionné parmi un composant de carburant dérivé de Fischer-Tropsch, une huile, un ester alkylique d'acide gras et des combinaisons de ces derniers.

2. Utilisation selon la revendication 1, dans laquelle le régime moteur va de 1 200 à 2 000 tr/min.

3. Utilisation selon la revendication 2, dans laquelle le régime moteur va de 1 200 à 1 900 tr/min.

4. Utilisation selon l'une quelconque des revendications précédentes, aux fins d'atténuer, au moins dans une certaine mesure, une détérioration des performances d'accélération du moteur due à une autre cause.

5. Utilisation selon l'une quelconque des revendications précédentes, dans laquelle la viscosité cinématique à 40 °C (VK 40) de la composition de carburant diesel, incluant le composant augmentant la viscosité utilisé à l'intérieur de celle-ci, vaut 2,8 mm$^2$/s (centistokes) ou plus.

6. Utilisation selon la revendication 5, dans laquelle l'huile est une huile dérivée de Fischer-Tropsch.

7. Utilisation selon l'une quelconque des revendications précédentes, dans laquelle un composant augmentant la densité est utilisé dans la composition de carburant diesel avec le composant augmentant la viscosité.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005054411 A
- GB 2077289 B
- EP 0147873 A
- EP 0583836 A
- US 4125566 A
- US 4478955 A
- GB 960493 A

- EP 0147240 A
- EP 0482253 A
- EP 0613938 A
- EP 0557516 A
- WO 9842808 A
- US 4208190 A

**Non-patent literature cited in the description**

- **VAN DER BURGT et al.** The Shell Middle Distillate Synthesis Process. *paper delivered at the 5th Syn-fuels Worldwide Symposium,* November 1985